# EUROPEAN PATENT SPECIFICATION

(11) **EP 0 807 614 B1**
(45) Date of publication and mention of the grant of the patent: **23.04.2003**
(21) Application number: 97107575.9
(22) Date of filing: 07.05.1997
(51) Int. Cl.: C04B 28/02

(54) **Accelerating agent, spraying material and spraying method employing it**
Beschleunigungsmittel, Sprühmaterial und Verfahren das dieses Material verwendet
Accélérateur, matériau pour pulvérisateur et procédé utilisant celui-ci

(30) Priority: 13.05.1996 JP 11799496; 06.08.1996 JP 20677396
(43) Date of publication of application: 19.11.1997
(73) Proprietor: DENKI KAGAKU KOGYO KABUSHIKI KAISHA, Chiyoda-ku Tokyo (JP)
(72) Inventor: Ishida, Atsumu, Denki Kagaku Kogyo K.K., Nishikubiki-gun, Niigata-ken (JP); Yanagihara, Tsuyoshi, Denki Kagaku Kogyo K.K., Nishikubiki-gun, Niigata-ken (JP); Mihara, Toshio, Denki Kagaku Kogyo K.K., Nishikubiki-gun, Niigata-ken (JP)
(74) Representative: Wächtershäuser, Günter, Prof. Dr.

(56) References cited:
- EP-A- 0 254 501
- JP-A- 4 331 750
- CHEMICAL ABSTRACTS, vol. 108, no. 16, 18 April 1988 Columbus, Ohio, US; abstract no. 136767m, XP000157816 & JP 62 297 248 A (DENKI KAGAKU KOGYO K.K.)
- CHEMICAL ABSTRACTS, vol. 111, no. 4, 24 July 1989 Columbus, Ohio, US; abstract no. 27836z, XP000060171 & JP 01 051 352 A (DENKI KAGAKU KOGYO K.K.)
- CHEMICAL ABSTRACTS, vol. 113, no. 20, 12 November 1990 Columbus, Ohio, US; abstract no. 177239n, XP000192485 & JP 02 141 449 A (DENKI KAGAKU KOGYO K.K.)
- CHEMICAL ABSTRACTS, vol. 113, no. 10, 3 September 1990 Columbus, Ohio, US; abstract no. 83865m, XP000183465 & JP 02 097 445 A (DENKI KAGAKU KOGYO K.K.)
- DATABASE WPI Section Ch, Week 9301 Derwent Publications Ltd., London, GB; Class L02, AN 93-004181 XP002038778 & JP 04 331 750 A (DENKI KAGAKU KOGYO KK) , 19 November 1992

## Description

The present invention relates to an accelerating agent, a spraying material and a spraying method employing it. Particularly, it relates to an accelerating agent which improves the quick setting property and adhesion of concrete sprayed to a ceiling or wall of a tunnel or pit, a spraying material comprising such an accelerating agent, and a spraying method employing such a spraying material.

For the purpose of the present invention, a spraying concrete is a general term which covers a cement paste, mortar and concrete for spraying.

Heretofore, it has been common that during excavation of a tunnel, a spraying concrete is sprayed on the excavated surface for lining to prevent falling of the excavated surface or collapse due to spring water.

In tunneling work, it has been common that primary spraying is carried out to apply a spraying concrete to an excavated surface, and then secondary lining is carried out to form a concrete wall on the applied surface. However, there is a recent trend to widely employ a single shell system whereby the work is completed by the primary spraying only.

Spraying methods for a spraying concrete are generally classified into two types of dry system and wet system.

The dry system spraying method is a method wherein a dry mixed mixture of cement, aggregate and an accelerating agent is transported by compressed air and immediately prior to spraying, water is added and mixed, followed by spraying from a nozzle to the surface to be treated. The wet system spraying method is a method in which concrete kneaded with water is transported, and during the transportation, an accelerating agent is added and mixed, followed by spraying from a nozzle to the surface to be treated.

As the accelerating agent to be used for the spraying, a composition comprising calcium aluminate and an alkali metal carbonate or aluminate, a composition comprising calcined alunite, lime or an alkali metal carbonate, or a composition comprising an alkali metal carbonate, hydroxide, silicate and aluminate, has been proposed (e.g. JP-B-56-27457 or JP-A-60-260452). These accelerating agents usually contain an alkali metal component which shows a strong alkaline nature, such as sodium or potassium in the form of a hydroxide, a carbonate, a silicate or an aluminate, in order to attain quick setting.

Such an alkali metal component is strongly alkaline, and when incorporated in the spraying concrete, it may cause an alkali-aggregate reaction depending upon the type of aggregate used. Thus, it had a problem that it was likely to adversely affect a concrete structure.

Further, such a strongly alkaline substance is soluble in water, and if it directly contacts the skin of a worker, it causes a serious damage to the skin, whereby the working environment at the excavation site will be substantially deteriorated. Further, there has been a problem that it is likely to dissolve in soil water, thus leading to environmental pollution of the surrounding area.

To solve such a problem, a setting accelerator comprising calcium aluminate, calcium sulfoaluminate and a basic aluminum salt, was proposed as an accelerator for spraying which contains substantially no or little alkali metal component (JP-A-8-48553).

However, such an accelerating agent had problems such that the quick setting property was inadequate, and rebound of the sprayed concrete was substantial, the loss of material was accordingly substantial, and dust was likely to be formed.

The present inventors have conducted an extensive study to solve such problems and as a result, have found that by using a certain specific accelerating agent, it is possible to obtain a spraying concrete which provides excellent quick setting property without deteriorating the working environment or the surrounding environment. The present invention has been accomplished on the basis of this discovery.

That is, the present invention provides an accelerating agent which comprises calcium aluminate glass or calcium aluminosilicate glass, aluminum sulfate and pozzolanic material as effective components as defined by claim 1 and claim 2, respectively, such an accelerating agent wherein the pozzolanic material is at least one member selected from the group consisting of silica fume, meta-kaolin, blast furnace slag and fly ash, a spraying material which comprises cement and such an accelerating agent as effective components, a spraying concrete which contains such a spraying material as an effective component, and a spraying method which sprays such a spraying concrete.

Now, the present invention will be described in detail with reference to the preferred embodiments.

The accelerating agent of the present invention comprises calcium aluminate glass or calcium aluminosilicate glass, aluminum sulfate and pozzolanic material as effective components.

The calcium aluminate glass (hereinafter referred to as CA glass) to be used in the present invention, is necessary to impart a quick setting property and is usually prepared by mixing CaO material and Al₂O₃ material, heating the mixture at a high temperature of e.g. from 1,200 to 1,700°C by e.g. an electric furnace to form a melt of calcium aluminate mineral represented, for example, by 3CaO·Al₂O₃, 12CaO·7Al₂O₃ or CaO·Al₂O₃, and quenching the melt for vitrification.

The calcium aluminosilicate glass (hereinafter referred to as CAS glass) to be used in the present invention is usually the one prepared by mixing CaO material, Al₂O₃ material and SiO₂ material likewise to form a melt of calcium aluminosilicate mineral and quenching the melt for vitrification. It is preferred to use CAS glass rather than CA glass, since CAS glass is excellent in the quick setting property.

As a method for quenching the melt of calcium aluminate or calcium aluminosilicate mineral, a high pressure air method may, for example, be mentioned wherein the melt is blown by high pressure air for cooling.

The CaO material may, for example, be quick lime, slaked lime, limestone or calcium carbonate. The Al₂O₃ material may, for example, be aluminum oxide, bauxite, diaspore, feldspar or clay. The SiO₂ material may, for example, be silica sand, clay, diatomaceous earth or silicon oxide. It is preferred to use calcium carbonate, aluminum oxide or silicon oxide, which does not substantially contain an alkali metal component.

The CaO content in CA glass is preferably from 35 to 55 wt%. If the content of CaO is outside this range, no adequate quick setting property may sometimes be obtained.

The composition of CAS glass preferably comprises from 40 to 50 wt% of CaO, from 40 to 50 wt% of Al₂O₃ and from 10 to 20 wt% of SiO₂. If CaO or Al₂O₃ is outside such a range, no adequate quick setting property may sometimes be obtained. If SiO₂ is less than 10 wt%, high strength may not last for a long period of time, and if it exceeds 20 wt%, the initial strength may sometimes be low.

For the purpose of the present invention, glass is meant for "one having a glass transition point" as commonly used in the field of glass. CA glass or CAS glass may not necessarily be entirely glass and may be one having a vitrification ratio of at least 60%. If the vitrification ratio is less than 60%, no adequate setting property may sometimes be obtained.

The vitrification ratio may be determined by heating a sample at 1,000°C for 2 hours and then gradually cooling it at a cooling rate of 5°C/min, whereby area S₀ of the main peak of crystal mineral is obtained by a powder X-ray diffraction method, and the vitrification ratio is obtained from this S₀ and the main peak area S of the crystal in the sample by using the formula of glass vitrification ratio = (1-S/S₀)×100.

The particle size of CA glass or CAS glass of the present invention is not particularly limited, but it is at a level with a Blaine value of from 3,000 to 9,000 cm²/g. If the Blaine value is less than 3,000 cm²/g, no adequate accelerating property may sometimes be obtained, and even if it exceeds 9,000 cm²/g, no further effects may be expected.

The aluminum sulfate to be used in the present invention, is necessary to improve the quick setting property, and commercially available aluminum sulfate may be used for this purpose without being influenced by impurities which are usually contained. The aluminum sulfate is available in the form of an anhydrous salt or the one containing water of crystallization, and either type may be used as it is. It is not restricted by the degree of water of crystallization.

The particle size of aluminum sulfate is not particularly limited, but it is preferably at a level with a Blaine value of from 3,000 to 9,000 cm²/g. If the Blaine value is less than 3,000 cm²/g, no adequate quick setting property may sometimes be obtained, and even if it exceeds 9,000 cm²/g, no further effects may be expected.

The amount of aluminum sulfate is preferably from 20 to 50 parts by weight, more preferably from 30 to 40 parts by weight, per 100 parts by weight of CA glass. If the amount is outside this range, no adequate quick setting property may sometimes be obtained.

The pozzolanic material to be used in the present invention is a material containing reactive silicic acid, which cures upon reaction with calcium hydroxide. For example, it may be an artificial material such as silica fume, meta-kaolin, blast furnace slag or fly ash, or a natural material such as diatomaceous earth or volcanic ash. In the present invention, it is preferred to use one or more pozzolanic materials selected from the group consisting of silica fume, meta-kaolin, blast furnace slag and fly ash with a view to improving the quick setting property and reducing rebound of the spraying concrete.

The silica fume to be used in the present invention is so-called silica flower, silica dust or microsilica, which is an industrial by-product formed during preparation of metal silicon useful as a starting material for various materials, or a ferro alloy such as a ferro silicon to be used for adding an alloy element to steel, or to be used as an acid removing agent or a desulfurization agent for the preparation of steel.

The ferrosilicon or metal silicon is produced by using silica or high purity quartz, scrap iron and a reducing agent such as carbon or coal, as starting materials, and heating such materials to a high temperature close to 2,000°C by an electric furnace. During the production, silicon oxide formed as an intermediate product is glassified, and a part thereof scatters in air and is oxidized in an exhaust duct and recovered in a dust collector in the form of SiO₂. Such SiO₂ is silica fume which is spherical ultrafine particles.

The chemical composition of silica fume varies depending upon the materials used, the method for the production or the type of the main products. However, the main component is amorphous SiO₂, and the SiO₂ content is preferably at least 80 wt%.

The specific gravity is usually from 2.1 to 2.2, the bulk density is from 250 to 300 kg/m³, and the powder degree is at a level of a BET specific surface area of from 15,000 to 25,000 m²/kg and the average particle size is at a level of from 0.1 to 0.2 µm.

The amount of silica fume is preferably from 50 to 200 parts by weight, more preferably from 100 to 150 parts by weight, per 100 parts by weight of CA glass. If the amount is outside this range, no adequate quick setting property may sometimes be obtained.

The meta-kaolin to be used in the present invention is obtained by calcining kaolinite at a temperature of from 500 to 600°C, whereby the main components SiO₂ and Al₂O₃ have been made amorphous.

The particle size of the meta-kaolin is preferably at a level with a Blaine value of at least 4,000 cm²/g, more preferably at least 6,000 cm²/g. If the Blaine value is less than 4,000 cm²/g, no adequate quick setting property may sometimes by obtained.

The blast furnace slag to be used in the present invention is fine powder composed mainly of an aluminosilicate obtained by pulverizing or pulverizing and classifying a vitrified product obtained by quenching with air or water, a molten slag produced as a by-product during the production of pig iron from iron ore by a blast furnace.

The blast furnace slag contains CaO, SiO₂, Al₂O₃ and MgO and preferably has a ratio of CaO/SiO₂ = 1.15 to 1.25, a ratio of (CaO+MgO)/(SiO₂+Al₂O₃) = 0.90 to 1.05, Al₂O₃ being less than 15 wt%, and MgO being less than 5 wt%.

The particle size of the blast furnace slag is preferably at a level with a Blaine value of at least 4,000 cm²/g, more preferably at least 6,000 cm²/g. If the Blaine value is less than 4,000 cm²/g, no adequate quick setting property may sometimes be obtained.

The amount of the blast furnace slag is preferably from 50 to 200 parts by weight, more preferably from 100 to 150 parts by weight, per 100 parts by weight of CA glass. If the amount is outside this range, no adequate quick setting property may sometimes be obtained.

The fly ash to be used in the present invention is the one obtained by collecting, by e.g. an electric dust collector, a spherical product formed by cooling a molten ash, during combustion of fine carbon powder, and it contains at least 60 wt% of SiO₂ and may contain Al₂O₃, Fe₂O₃ and carbon.

The particle size of the fly ash is preferably at a level with a Blaine value of from 3,000 to 6,000 cm²/g. If the Blaine value is less than 3,000 cm²/g, no adequate quick setting property may sometimes be obtained, and even if it exceeds 6,000 cm²/g, no further effects may sometimes be expected.

The amount of the fly ash is preferably from 50 to 200 parts by weight, more preferably from 100 to 150 parts by weight, per 100 parts by weight of CA glass. If the amount is outside this range, no adequate quick setting property may sometimes by obtained.

The total amount of alkali metals in the accelerating agent is preferably at most 0.75 wt% as calculated as sodium oxide (Na₂O). If the total amount exceeds 0.75 wt%, an alkali-aggregate reaction will take place, which may adversely affect a concrete structure. The particle size of the accelerating agent is not particularly limited, since it depends upon the particular purpose or the method of use, but it is preferably at a level with a Blaine value of from 3,000 to 9,000 cm²/g. If the Blaine value is less than 3,000 cm²/g, the quick setting property tends to be low, and even if it exceeds 9,000 cm²/g, no further effects can be expected.

The amount of the accelerating agent is preferably from 5 to 20 parts by weight, more preferably from 8 to 15 parts by weight, per 100 parts by weight of the spraying material comprising cement and the accelerating agent. If the amount is outside this range, no adequate quick setting property may sometimes be obtained.

Here, the cement is not particularly limited and may, for example, be various Portland cements such as normal, high early strength and ultra-high early strength Portland cements.

Further, it is possible to incorporate to the accelerating agent or the spraying material of the present invention, one or more additives selected from setting adjusting agents, AE agents, water-reducing agents, AE water-reducing agents, fluidizing agents, thickeners, water-holding agents, water-proofing agents, blowing agents, foaming agents, underwater non-separable admixtures such as methylcellulose, anti-freezing agents, rust-proofing agents, colorants (pigments), calcium compounds such as calcium hydroxide, polymer emulsions (latexes), fiber materials such as glass fibers, carbon fibers and steel fibers, and aggregates such as silica sand, natural sand and gravel, within a range not to impair the purpose of the present invention.

To prepare the accelerating agent or the spraying material of the present invention, a conventional mixing and stirring apparatus such as an inclined barrel mixer, an omni mixer, a twin-cylinder mixer, a Henshel mixer or a Naughter mixer, may be used.

The mixing may be carried out in such a manner that the respective materials are mixed at the time of application, or some or all of such materials may be mixed beforehand.

Further, the aging method is not particularly limited, and a commonly employed aging method may be used.

For the spraying operation of the spraying material of the present invention, either a dry spraying method or a wet spraying method may be employed.

For example, at the time of spraying, using coarse aggregate having the maximum aggregate size of 10 mm, concrete may be blended to have a water/(cement+accelerating agent) ratio of 45% and a fine aggregate ratio of 60%.

Further, as a wet spraying method, a spraying method may, for example, be mentioned, wherein water, cement, coarse aggregate and fine aggregate are mixed by a mixer to obtain a concrete, which is then transported under pressure by means of a spraying machine which is capable of transporting concrete under air pressure at a rate of from 10 to 20 m³/hr, an accelerating agent is separately transported under pressure by means of a compressor and mixed with the concrete in the vicinity of a nozzle of the spraying machine, followed by spraying.

Now, the present invention will be described in further detail with reference to Examples. However, it should be understood that the present invention is by no means restricted to such specific Examples.

### EXAMPLE 1

CaO material and Al₂O₃ material, CaO material, Al₂O₃ material and SiO₂ material, were mixed and melted in an electric furnace at 1,600°C. The melt thereby obtained was quenched by a high pressure air method, followed by pulverization to obtain CA glass and CAS glass having a Blaine value of 5,000 ± 200 cm²/g as identified in Table 1.

100 parts by weight of the prepared CA glass, 35 parts by weight of aluminum sulfate α and 125 parts by weight of pozzolanic material ① were mixed to obtain an accelerating agent. The alkali metal components in this accelerating agent were analyzed. The results are shown in Table 2.

This accelerating agent was mixed with cement to obtain a spraying material, whereby the amount of the accelerating agent was 10 parts by weight in 100 parts by weight of the spraying material comprising cement A and the accelerating agent.

700 g of the obtained spraying material and 2,100 g of fine aggregate were blended and dry-mixed for 30 seconds at a low speed by means of a small size table top type mortar mixer. Then, 350 g of water was added thereto, and the mixture was kneaded for 10 seconds at a high speed to obtain cement mortar, whereupon the setting property of the cement mortar was evaluated by a proctor penetration resistance. The results are shown in Table 2.

For the purpose of comparison, an experiment was carried out in the same manner as above by using a commercially available accelerating agent instead of the accelerating agent of the present invention. The results are shown also in Table 2.

### Materials used

CaO material: Calcium carbonate, commercial product
Al₂O₃ material: Aluminum oxide, commercial product
SiO₂ material: Silicon oxide, commercial product
Aluminum sulfate α: Anhydride, Na₂O eq. 0.04 wt%
Pozzolanic material ①: Silica fume, by-product from the production of ferrosilicon, specific gravity 2.20, specific surface area: 21.9 m²/g, Na₂O eq. 1.4 wt%
Commercially available accelerating agent: Main component: calcium aluminate, Na₂O eq. 15.8 wt%
Cement A: Normal Portland cement, Blaine value: 3,300 cm²/g, Na₂O eq. 0.48 wt%
Fine aggregate: River sand produced in Himekawa, Niigata-ken, Japan, specific gravity: 2.62
Water: City water

### Measuring methods

Alkali metals: Measured by atomic absorption spectroscopy. Alkali metal components other than sodium were also calculated as Na₂O, and the total amount of alkali metal components was represented by Na₂O eq.
Proctor penetration resistance: The mixture was kneaded in a constant temperature chamber of 20°C, and then it was immediately divided into two layers in formworks and quickly packed while pushing the mortar by a pushing rod, whereupon the proctor penetration resistance was measured every a predetermined period of time after introducing water, by means of a needle having a needle head area of 1/40 in² in accordance with ASTM C 403-65 T.

**Table 1**

| CA glass and CAS glass symbol | CaO (wt%) | Al₂O₃ (wt%) | SiO₂ (wt%) | Vitrification ratio (%) |
|---|---|---|---|---|
| a | 35 | 65 | 0 | 61 |
| b | 45 | 55 | 0 | 95 |
| c | 55 | 45 | 0 | 91 |
| d | 48 | 52 | 0 | 0 |
| e | 62 | 38 | 0 | 0 |
| | | | | |
| f | 60 | 35 | 5 | 65 |
| g | 60 | 30 | 10 | 75 |
| h | 50 | 45 | 5 | 91 |
| i | 50 | 40 | 10 | 92 |
| j | 50 | 30 | 20 | 95 |
| | | | | |
| k | 45 | 45 | 10 | 95 |
| l | 45 | 40 | 15 | 97 |
| m | 40 | 55 | 5 | 92 |
| n | 40 | 50 | 10 | 93 |
| o | 40 | 45 | 15 | 96 |
| | | | | |
| p | 40 | 40 | 20 | 96 |
| q | 40 | 30 | 30 | 96 |
| r | 30 | 60 | 10 | 68 |
| s | 30 | 50 | 20 | 75 |
| t | 30 | 40 | 30 | 73 |

**Table 2**

| Test No. | CA glass and CAS glass | Na₂O eq. (wt%) | Proctor penetration resistance (psi) | | | | | Notes |
|---|---|---|---|---|---|---|---|---|
| | | | 1 min | 2 min | 3 min | 5 min | 10 min | |
| 1-1 | *1 | 1.10 | 240 | 400 | 600 | 1120 | 1600 | Comparative |
| 1-2 | a | 0.69 | 1000 | 2200 | 3100 | 4200 | - | Invention |
| 1-3 | b | 0.69 | 1500 | 2600 | 3300 | 4200 | - | Invention |
| 1-4 | c | 0.69 | 1200 | 2100 | 2800 | 4000 | - | Invention |
| 1-5 | d | 0.69 | 600 | 1100 | 2000 | 3300 | 3800 | Comparative |
| | | | | | | | | |
| 1-6 | e | 0.69 | 500 | 800 | 1400 | 2400 | 3600 | Comparative |
| 1-7 | f | 0.69 | 1500 | 2300 | 2900 | 4000 | - | Invention |
| 1-8 | g | 0.69 | 1200 | 2000 | 3200 | 4300 | - | Invention |
| 1-9 | h | 0.69 | 1000 | 1800 | 2400 | 4100 | - | Invention |
| 1-10 | i | 0.69 | 1500 | 2400 | 4000 | - | - | Invention |
| | | | | | | | | |
| 1-11 | j | 0.69 | 900 | 1300 | 2600 | 4000 | - | Invention |
| 1-12 | k | 0.69 | 800 | 1500 | 2800 | 4100 | - | Invention |
| 1-13 | l | 0.69 | 1800 | 2500 | 4600 | - | - | Invention |
| 1-14 | m | 0.69 | 1100 | 1700 | 3000 | 4000 | - | Invention |
| 1-15 | n | 0.69 | 1600 | 2400 | 4400 | - | - | Invention |
| | | | | | | | | |
| 1-16 | o | 0.69 | 900 | 1600 | 2900 | 4200 | - | Invention |
| 1-17 | p | 0.69 | 1700 | 2800 | 4700 | - | - | Invention |
| 1-18 | q | 0.69 | 1300 | 1900 | 2500 | 4500 | - | Invention |
| 1-19 | r | 0.69 | 1200 | 2200 | 3400 | 4600 | - | Invention |
| 1-20 | s | 0.69 | 1200 | 1800 | 2300 | 4000 | - | Invention |
| | | | | | | | | |
| 1-21 | t | 0.69 | 1000 | 2400 | 3000 | 4100 | - | Invention |
| 1-22 | *2 | 15.8 | 680 | 880 | 1520 | 2100 | 4600 | Comparative |

| | | | | | | | | |
|---|---|---|---|---|---|---|---|---|
| *1 in the column for "CA glass" indicates that in Test No. 1-1, CA glass was not used. *2 indicates that in Test No. 1-24, the commercially available accelerating agent was used. Symbol "-" for the proctor penetration resistance indicates that no measurement was made. | | | | | | | | |

### EXAMPLE 2

An accelerating agent was prepared by mixing 100 parts by weight of prepared CA glass, 35 parts by weight of aluminum sulfate α and 125 parts by weight of pozzolanic material ②, and the alkali metal components in this accelerating agent were analyzed. The results are shown in Table 3.

This accelerating agent was mixed with cement to obtain a spraying material, whereby the amount of the accelerating agent was 10 parts by weight in 100 parts by weight of the spraying material comprising cement A and the accelerating agent.

700 g of the obtained spraying material, 2,100 g of fine aggregate were blended and dry-mixed for 30 seconds at a low speed by means of a small size table top type mortar mixer. Then, 280 g of water was added thereto, and the mixture was kneaded for 10 seconds at a high speed to obtain cement mortar, whereupon the setting property of the cement mortar was evaluated by a proctor penetration resistance. The results are shown in also in Table 3.

### Material used

Pozzolanic material ②: Blast furnace slag, Blaine value: 8,000 cm²/g, Na₂O eq. 0.55 wt%

**Table 3**

| Test No. | CA glass and CAS glass | Na₂O eq. (wt%) | Proctor penetration resistance (psi) | | | | | Notes |
|---|---|---|---|---|---|---|---|---|
| | | | 1 min | 2 min | 3 min | 5 min | 10 min | |
| 2-1 | *1 | 0.44 | 260 | 450 | 700 | 1300 | 1800 | Comparative |
| 2-2 | a | 0.29 | 1100 | 2400 | 3400 | 4600 | - | Invention |
| 2-3 | b | 0.29 | 1700 | 2900 | 3600 | 4600 | - | Invention |
| 2-4 | c | 0.29 | 1400 | 2300 | 3100 | 4400 | - | Invention |
| 2-5 | d | 0.29 | 700 | 1300 | 2200 | 3700 | 3900 | Comparative |
| 2-6 | e | 0.29 | 600 | 900 | 1600 | 2700 | 3800 | Comparative |
| | | | | | | | | |
| 2-7 | f | 0.29 | 1700 | 2600 | 3200 | 4400 | - | Invention |
| 2-8 | g | 0.29 | 1400 | 2200 | 3600 | 4700 | - | Invention |
| 2-9 | h | 0.29 | 1100 | 2000 | 2600 | 4300 | - | Invention |
| 2-10 | i | 0.29 | 1700 | 2700 | 4400 | - | - | Invention |
| | | | | | | | | |
| 2-11 | j | 0.29 | 1100 | 1500 | 2900 | 4400 | - | Invention |
| 2-12 | k | 0.29 | 1000 | 2300 | 4000 | - | - | Invention |
| 2-13 | l | 0.29 | 1900 | 2800 | 4700 | - | - | Invention |
| 2-14 | m | 0.29 | 1300 | 1900 | 3300 | 4400 | - | Invention |
| 2-15 | n | 0.29 | 1800 | 2700 | 4500 | - | - | Invention |
| | | | | | | | | |
| 2-16 | o | 0.29 | 1100 | 2400 | 4100 | - | - | Invention |
| 2-17 | p | 0.29 | 1900 | 3000 | 4700 | - | - | Invention |
| 2-18 | q | 0.29 | 1500 | 2100 | 2800 | 4700 | - | Invention |
| 2-19 | r | 0.29 | 1400 | 2600 | 3700 | 4800 | - | Invention |
| 2-20 | s | 0.29 | 1400 | 2000 | 2500 | 4400 | - | Invention |
| | | | | | | | | |
| 2-21 | t | 0.29 | 1100 | 2600 | 3300 | 4500 | - | Invention |

| | | | | | | | | |
|---|---|---|---|---|---|---|---|---|
| *1 in the column for "CA glass" indicates that in Test No. 2-1, CA glass was not used. Symbol "-" for the proctor penetration resistance indicates that no measurement was made. | | | | | | | | |

### EXAMPLE 3

The experiment was carried out in the same manner as in Example 1 except that 100 parts by weight of CA glass as shown in Table 4, aluminum sulfate α as shown in Table 4 and 125 parts by weight of pozzolanic material ① were used. The results are shown also in Table 4.

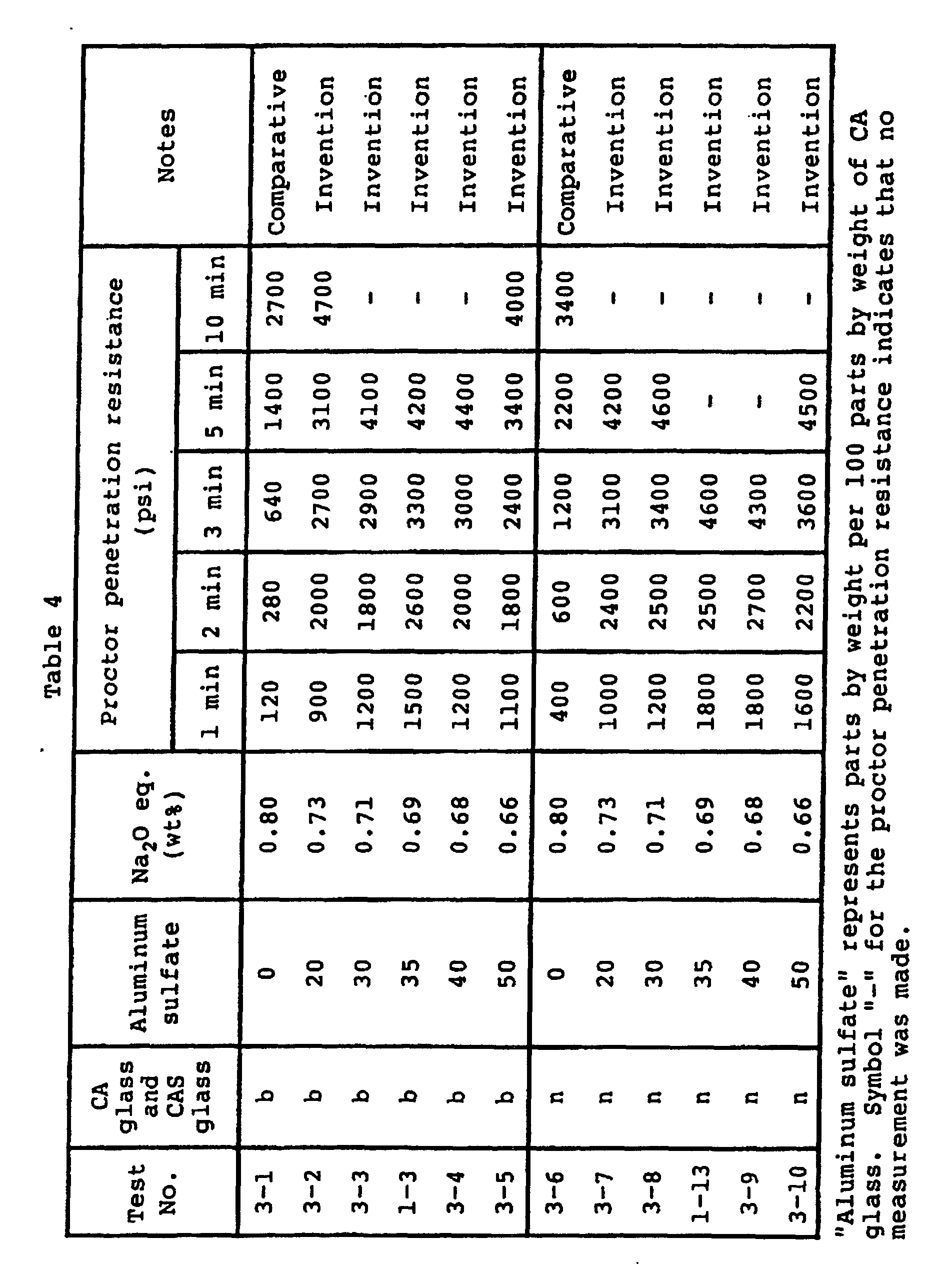

### EXAMPLE 4

The experiment was carried out in the same manner as in Example 2 except that 100 parts by weight of CA glass n, aluminum sulfate α as identified in Table 5 and 125 parts by weight of pozzolanic material ② were used. The results are shown in Table 5.

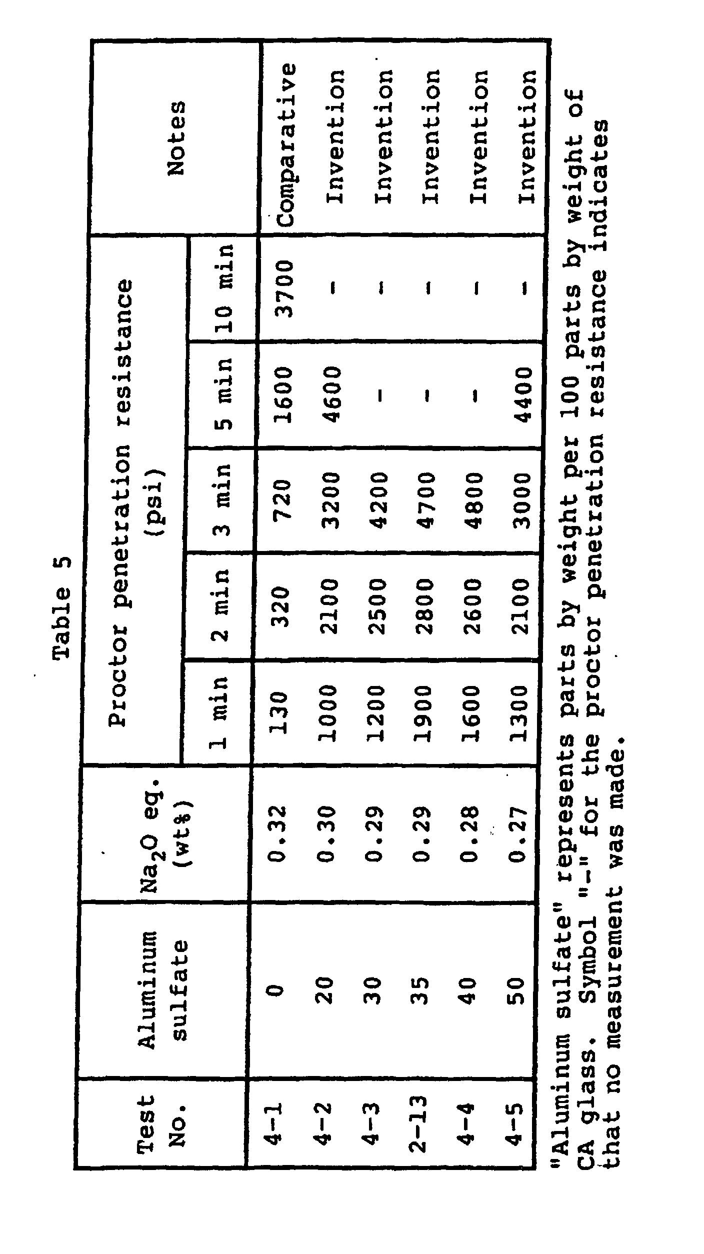

### EXAMPLE 5

The experiment was carried out in the same manner as in Example 1 except that 100 parts by weight of CA glass as identified in Table 6, 35 parts by weight of aluminum sulfate α and 125 parts by weight of pozzolanic materiel as identified in Table 6 were used. The results are shown in Table 6.

### Materials used

Pozzolanic material ③: Meta-kaolin, average particle size: 3.2 µm, Na₂O eq. 0.30 wt%
Pozzolanic material ④: Blast furnace slag, Blaine value: 6,000 cm²/g, Na₂O eq. 0.51 wt%
Pozzolanic material ⑤: Blast furnace slag, Blaine value: 4,000 cm²/g, Na₂O eq. 0.50 wt%
Pozzolanic material ⑥: Fly ash, Blaine value: 4,000 cm²/g, Na₂O eq. 1.40 wt%

**Table 6**

| Test No. | CA glass and CAS glass | Pozzolanic material | Na₂O eq. (wt%) | Proctor penetration resistance (psi) | | | | |
|---|---|---|---|---|---|---|---|---|
| | | | | 1 min | 2 min | 3 min | 5 min | 10 min |
| 1-3 | b | ① | 0.69 | 1500 | 2600 | 3300 | 4200 | - |
| 5-1 | b | ③ | 0.16 | 600 | 1600 | 2900 | 4000 | - |
| 5-2 | b | ② | 0.29 | 600 | 1200 | 2600 | 3500 | 4500 |
| 5-3 | b | ④ | 0.26 | 500 | 1000 | 2200 | 3000 | 4100 |
| 5-4 | b | ⑤ | 0.29 | 500 | 1300 | 2300 | 3100 | 4000 |
| 5-5 | b | ⑥ | 0.70 | 500 | 1000 | 2400 | 3000 | 4000 |
| 1-13 | n | ① | 0.69 | 1800 | 2500 | 4600 | - | - |
| 5-6 | n | ③ | 0.16 | 1000 | 2000 | 4100 | - | - |
| 5-7 | n | ② | 0.29 | 800 | 1500 | 2500 | 4800 | - |
| 5-8 | n | ④ | 0.26 | 600 | 1200 | 2700 | 4200 | - |
| 5-9 | n | ⑤ | 0.29 | 600 | 1000 | 2500 | 4400 | - |
| 5-10 | n | ⑥ | 0.70 | 500 | 1100 | 2700 | 4000 | - |
| Symbol "-" for the proctor penetration resistance indicates that no measurement was made. | | | | | | | | |

### EXAMPLE 6

The experiment was carried out in the same manner as in Example 2 except that 100 parts by weight of CA glass as identified in Table 7, 35 parts by weight of aluminum sulfate β and 125 parts by weight of pozzolanic material as identified in Table 7 were used. The results are shown in Table 7.

### Materials used

Aluminum sulfate β: 14 to 18 hydrate, first grade reagent, Na₂O eq. 0.04 wt%

**Table 7**

| Test No. | CA glass and CAS glass | Pozzolanic material | Na₂O eq. (wt%) | Proctor penetration resistance (psi) | | | | |
|---|---|---|---|---|---|---|---|---|
| | | | | 1 min | 2 min | 3 min | 5 min | 10 min |
| 6-1 | b | ① | 0.69 | 1400 | 1900 | 2300 | 4300 | - |
| 6-2 | b | ③ | 0.16 | 900 | 1600 | 2500 | 4200 | - |
| 6-3 | b | ② | 0.29 | 700 | 1200 | 2200 | 3300 | 4300 |
| 6-4 | b | ④ | 0.26 | 600 | 1300 | 2000 | 2900 | 4200 |
| 6-5 | b | ⑤ | 0.29 | 600 | 1000 | 2400 | 3100 | 4000 |
| 6-6 | b | ⑥ | 0.70 | 500 | 1200 | 2200 | 3000 | 4000 |
| 6-7 | n | ① | 0.69 | 1700 | 2300 | 3500 | 4400 | - |
| 6-8 | n | ③ | 0.16 | 1200 | 2000 | 3400 | 4200 | - |
| 6-9 | n | ② | 0.29 | 1000 | 1700 | 2600 | 4000 | - |
| 6-10 | n | ④ | 0.26 | 900 | 1900 | 3000 | 4100 | - |
| 6-11 | n | ⑤ | 0.29 | 800 | 1700 | 2900 | 4000 | - |
| 6-12 | n | ⑥ | 0.70 | 600 | 1100 | 2500 | 4000 | - |
| Symbol "-" for the proctor penetration resistance indicates that no measurement was made. | | | | | | | | |

### EXAMPLE 7

The experiment was carried out in the same manner as in Example 1 except that 100 parts by weight of CA glass as identified in Table 8, 35 parts by weight of aluminum sulfate α and pozzolanic material ① as identified in Table 8 were used. The results are shown in Table 8.

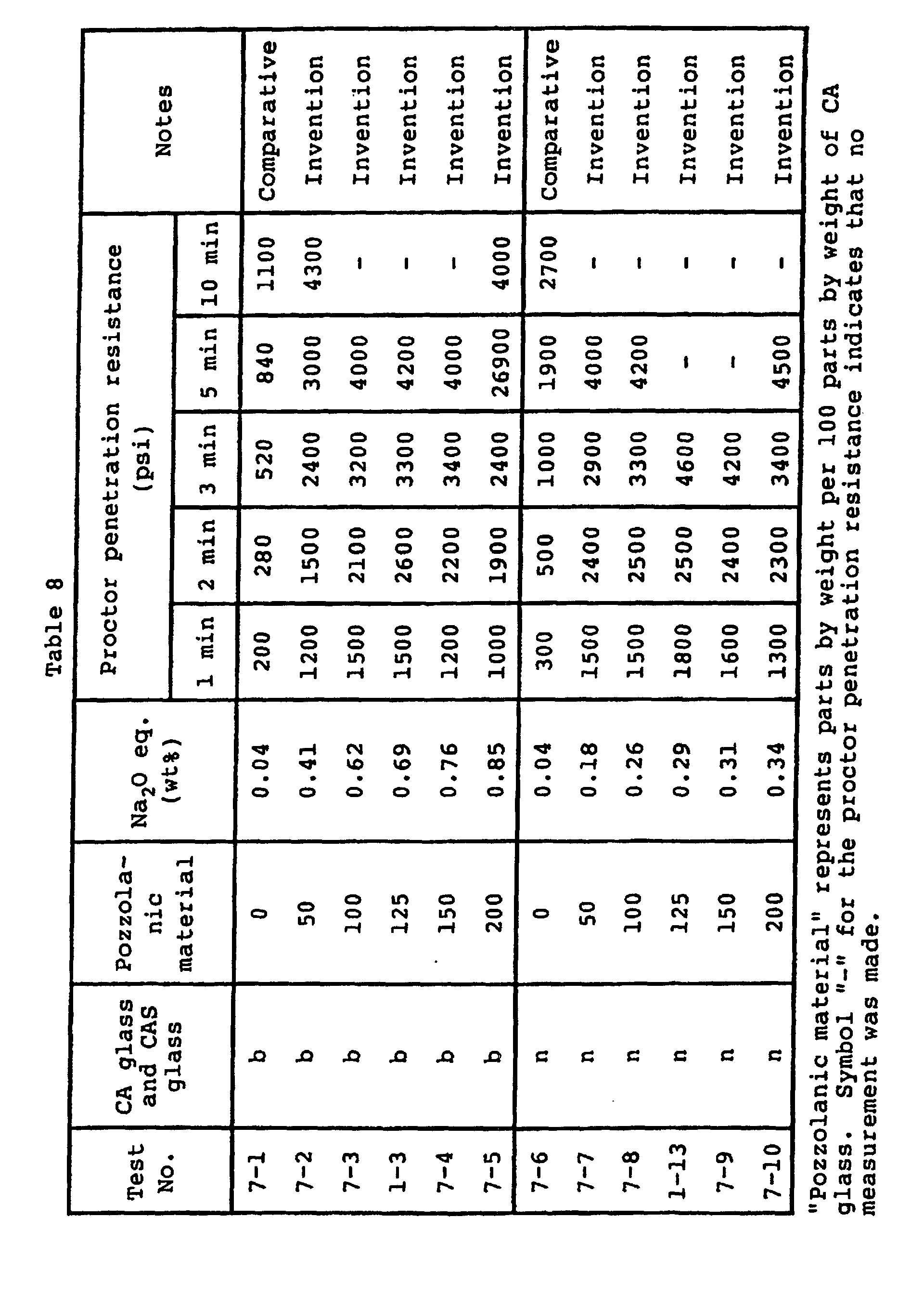

### EXAMPLE 8

The experiment was carried out in the same manner as in Example 2 except that 100 parts by weight of CA glass n, 35 parts by weight of aluminum sulfate α and pozzolanic material ② as identified in Table 9 were used. The results are shown in Table 9.

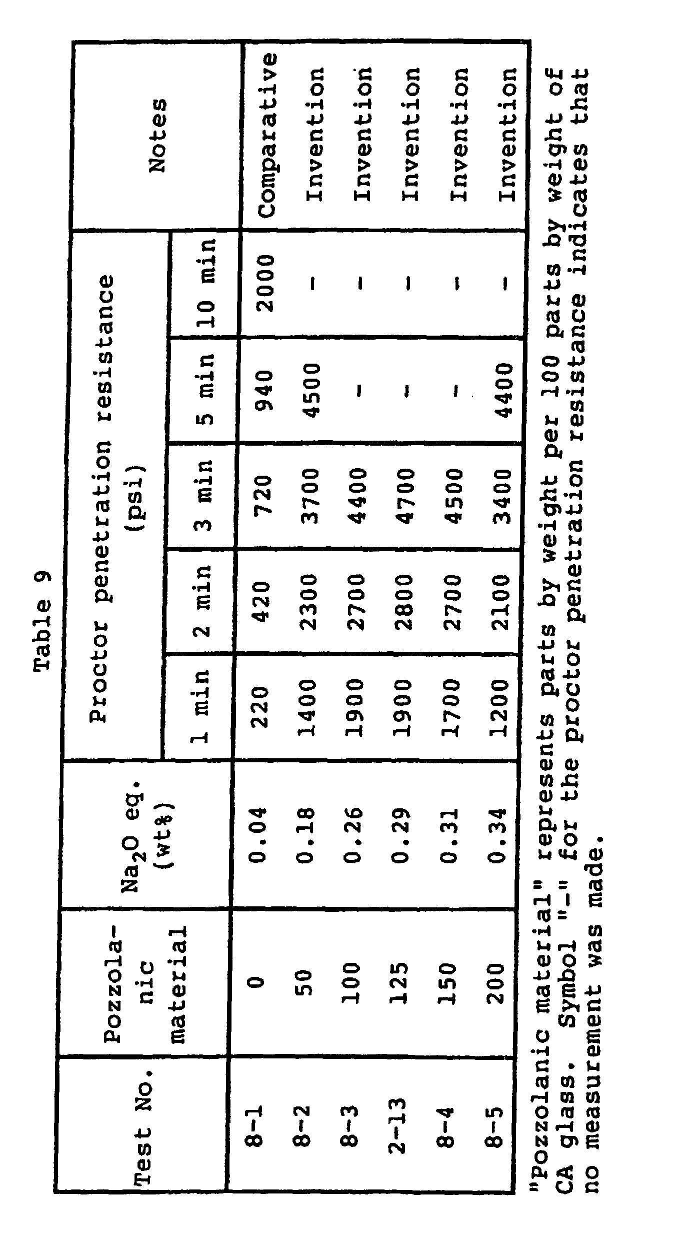

### EXAMPLE 9

An accelerating agent was prepared in the same manner as in Example 1 using 100 parts by weight of CA glass b, 35 parts by weight of aluminum sulfate α and 125 parts by weight of pozzolanic material ①. Na₂O eq. in the accelerating agent was 0.69 wt%.

The experiment was carried out in the same manner as in Example 1 except that this accelerating agent and cement as identified in Table 10 were used. The results are shown in Table 10.

### Materials used

Cement B: Moderate heat Portland cement, Blaine value: 3,100 cm²/g, Na₂O eq: 0.46 wt%
Cement C: High early strength Portland cement, Blaine value: 4,400 cm²/g, Na₂O eq: 0.43 wt%

**Table 10**

| Test No. | Cement | Proctor penetration resistance (psi) | | | | |
|---|---|---|---|---|---|---|
| | | 1 min | 2 min | 3 min | 5 min | 10 min |
| 1-3 | A | 1500 | 2600 | 3300 | 4200 | - |
| 9-1 | B | 1600 | 2500 | 3000 | 3800 | 4900 |
| 9-2 | C | 1300 | 2000 | 2300 | 3200 | 4200 |
| Symbol "-" for the proctor penetration resistance indicates that no measurement was made. | | | | | | |

### EXAMPLE 10

An accelerating agent was prepared in the same manner as in Example 2 using 100 parts by weight of CA glass n, 35 parts by weight of aluminum sulfate and 125 parts by weight of pozzolanic material ②. Na₂O eq. in the accelerating agent was 0.69 wt%.

The experiment was carried out in the same manner as in Example 2 except that this accelerating agent and cement as identified in Table 11 were used. The results are shown in Table 11.

**Table 11**

| Test No. | Cement | Proctor penetration resistance (psi) | | | | |
|---|---|---|---|---|---|---|
| | | 1 min | 2 min | 3 min | 5 min | 10 min |
| 2-13 | A | 1900 | 2800 | 4700 | - | - |
| 10-1 | B | 1800 | 2500 | 4400 | - | - |
| 10-2 | C | 1400 | 2100 | 3600 | 4600 | - |
| Symbol "-" for the proctor penetration resistance indicates that no measurement was made. | | | | | | |

### EXAMPLE 11

An accelerating agent was prepared in the same manner as in Example 1 using 100 parts by weight of CA glass as identified in Table 12, 35 parts by weight of aluminum sulfate α and 125 parts by weight of pozzolanic material ①. Na₂O eq. in the accelerating agent was 0.69 wt%.

The experiment was carried out in the same manner as in Example 1 except that this accelerating agent was used in an amount as identified in Table 12 i.e. parts by weight per 100 parts by weight of the spraying material. The results are shown in Table 12.

**Table 12**

| Test No. | CA glass and CAS glass | Accelerating agent | Proctor penetration resistance (psi) | | | | |
|---|---|---|---|---|---|---|---|
| | | | 1 min | 2 min | 3 min | 5 min | 10 min |
| 11-1 | b | 3 | 1000 | 1800 | 2200 | 2900 | 4000 |
| 11-2 | b | 5 | 1400 | 2400 | 3200 | 4200 | - |
| 1-3 | b | 7 | 1500 | 2600 | 3300 | 4200 | - |
| 11-3 | b | 10 | 1600 | 2500 | 3500 | 4400 | - |
| 11-4 | b | 15 | 2400 | 3500 | 4100 | - | - |
| 11-5 | n | 3 | 1200 | 2000 | 2800 | 3400 | 4400 |
| 11-6 | n | 5 | 1400 | 2500 | 3400 | 4000 | - |
| 1-13 | n | 7 | 1800 | 2500 | 4600 | - | - |
| 11-7 | n | 10 | 1700 | 3000 | 4800 | - | - |
| 11-8 | n | 15 | 1800 | 2800 | 4700 | - | - |
| "Accelerating agent" represents parts by weight per 100 parts by weight of spraying material. Symbol "-" for the proctor penetration resistance indicates that no measurement was made. | | | | | | | |

### EXAMPLE 12

An accelerating agent was prepared in the same manner as in Example 2 using 100 parts by weight of CA glass n, 35 parts by weight of aluminum sulfate α and 125 parts by weight of pozzolanic material ②. Na₂O eq. in the accelerating agent was 0.69 wt%.

The experiment was carried out in the same manner as in Example 2 except that this accelerating agent was used in an amount as identified in Table 13 i.e. parts by weight per 100 parts by weight of the spraying material. The results are shown in Table 13.

**Table 13**

| Test No. | Accelerating agent | Proctor penetration resistance (psi) | | | | |
|---|---|---|---|---|---|---|
| | | 1 min | 2 min | 3 min | 5 min | 10 min |
| 12-1 | 3 | 1400 | 2400 | 3200 | 4000 | - |
| 12-2 | 5 | 1600 | 2500 | 4200 | - | - |
| 2-13 | 7 | 1900 | 2800 | 4700 | - | - |
| 12-3 | 10 | 2000 | 2800 | 4900 | - | - |
| 12-4 | 15 | 2300 | 3000 | 4900 | - | - |
| "Accelerating agent" represents parts by weight per 100 parts by weight of spraying material. Symbol "-" for the proctor penetration resistance indicates that no measurement was made. | | | | | | |

### EXAMPLE 13

Using unit amounts of materials being 360 kg/m³ of cement A, 1,130 kg/m³ of fine aggregate, 756 kg/m³ of coarse aggregate and 162 kg/m³ of water, an accelerating agent as shown in Table 7 was mixed in an amount of 7 parts by weight in 100 parts by weight of the spraying material, to obtain concrete wherein the maximum aggregate size was 10 mm and the fine aggregate proportion was 60%. This concrete was sprayed to a simulated tunnel having a height of 3.5 m and a width of 3 m by means of a dry spraying machine and a wet spraying machine, whereupon the amount of the concrete fallen in the tunnel was measured, and the rebound ratio was calculated. The results are shown also in Table 14.

### Material used

Coarse aggregate:River gravel produced in Himekawa, Niigata-ken, Japan, specific gravity: 2.66

### Measuring method

Rebound ratio: The ratio of the rebound amount at the time of spraying of the concrete which fell off without attaching to the simulated tunnel to the amount of the concrete used for spraying.

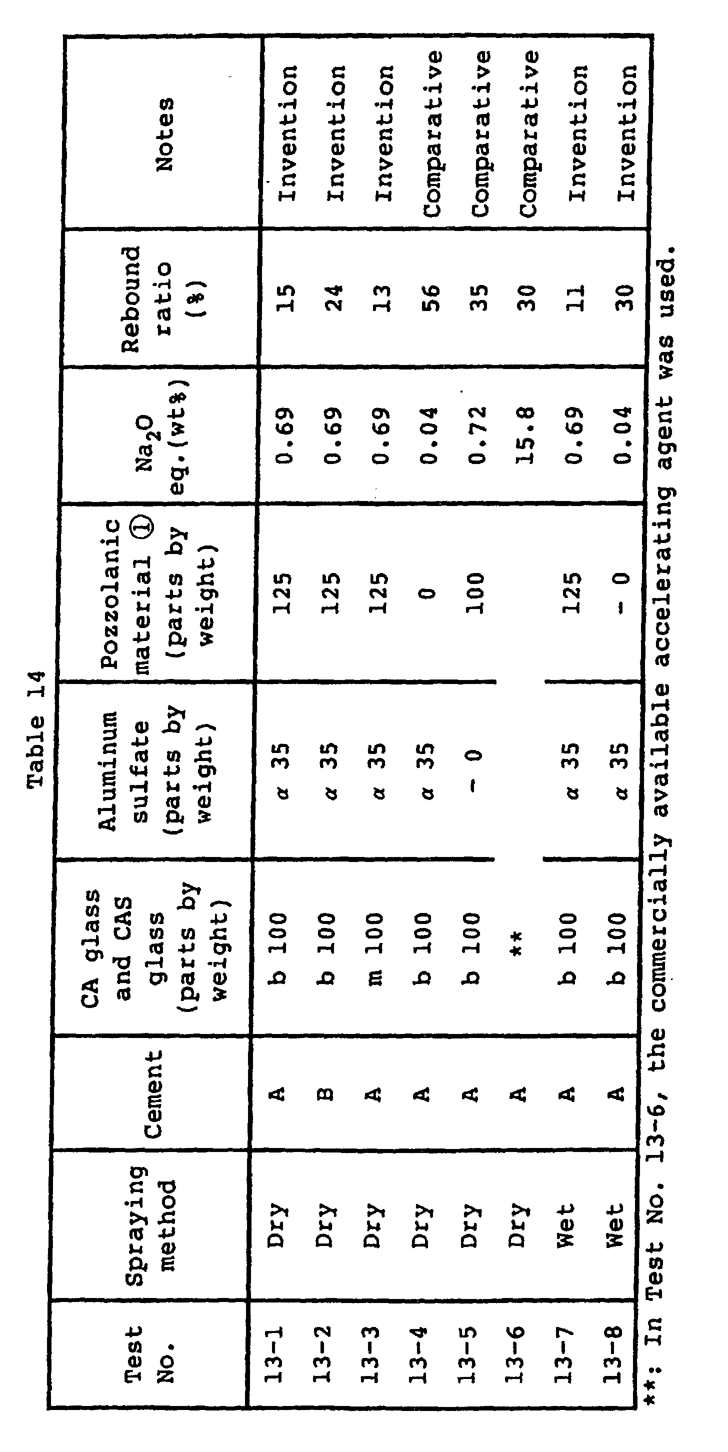

### EXAMPLE 14

The experiment was carried out in the same manner as in Example 13 except that an accelerating agent prepared by mixing 100 parts by weight of CA glass n, aluminum sulfate α and pozzolanic material ② or ③ in an amount as identified in Table 15, was used. The results are shown also in Table 15.

**Table 15**

| Test No. | Spraying method | Cement | Pozzolanic material | Na₂O eq.(wt%) | Rebound ratio (%) | Notes |
|---|---|---|---|---|---|---|
| 14-1 | Dry | A | ② 125 | 0.29 | 13 | Invention |
| 14-2 | Dry | B | ② 125 | 0.29 | 21 | Invention |
| 14-3 | Wet | A | ② 125 | 0.29 | 10 | Invention |
| 14-4 | Dry | A | ③ 125 | 0.74 | 23 | Invention |
| 14-5 | Dry | A | - 0 | 0.04 | 56 | Comparative |
| 14-6 | Dry | A | ② 100 | 0.30 | 33 | Comparative |
| 14-7 | Dry | A | - 0 | 15.8 | 30 | Comparative |
| 14-8 | Wet | A | - 0 | 0.04 | 30 | Comparative |
| "Pozzolanic material" represents parts by weight per 100 parts by weight of CA glass. Symbol "-" for the proctor penetration resistance indicates that no measurement was made. In Test No. 14-6, the aluminum sulfate was not used and in Test No. 14-7, commercially available accelerating agent was used as an accelerating agent. | | | | | | |

As described in the foregoing, the accelerating agent of the present invention is substantially free from alkali metal components; whereby there will be no adverse effects to the working environment or the surrounding environment, and it presents an excellent quick setting property.

## Claims

1. An accelerating agent which comprises calcium aluminate glass having a Blaine value of from 3,000 to 9,000 cm²/g, aluminum sulfate and pozzolanic material as effective components.

2. An accelerating agent which comprises calcium aluminosilicate glass having a Blaine value of from 3,000 to 9,000 cm²/g, aluminum sulfate and pozzolanic material as effective components.

3. The accelerating agent according to Claim 1 or 2, wherein the pozzolanic material is at least one member selected from the group consisting of silica fume, meta-kaolin, blast furnace slag and fly ash.

4. A spraying material which comprises cement and the accelerating agent as defined in Claim 1, 2 or 3 as effective components.

5. A spraying concrete which contains the spraying material as defined in Claim 4 as an effective component.

6. A spraying method for a spraying concrete which sprays the spraying concrete as defined in Claim 5.

## Patentansprüche

1. Beschleunigungsmittel, das Calciumaluminatglas mit einem Blaine-Wert von 3.000 bis 9.000 cm²/g, Aluminiumsulfat und pozzolanartiges Material als wirksame Bestandteile umfasst.

2. Beschleunigungsmittel, das Calciumaluminiumsilikatglas mit einem Blaine-Wert von 3.000 bis 9.000 cm²/g, Aluminiumsulfat und pozzolanartiges Material als wirksame Bestandteile umfasst.

3. Das Beschleunigungsmittel nach Anspruch 1 oder 2, wobei das pozzolanartige Material mindestens ein Element aus der Gruppe ist, die aus Siliciumdioxidstaub oder Quarzstaub oder Kieselpuder, Metakaolin, Hochofenschlacke und Flugasche besteht.

4. Spritz- oder Sprühmaterial, das Zement und das Beschleunigungsmittel, wie es in Anspruch 1, 2 oder 3 definiert ist, als wirksame Bestandteile umfasst.

5. Spritz- oder Sprühbeton, der das Spritz- oder Sprühmaterial, wie es in Anspruch 4 definiert ist, als einen wirksamen Bestandteil umfasst.

6. Spritz- oder Sprühverfahren für einen Spritz- oder Sprühbeton, bei dem der Spritz- oder Sprühbeton, wie er in Anspruch 5 definiert ist, gespritzt oder gesprüht wird.

## Revendications

1. Agent d'accélération qui comprend un verre à aluminate de calcium ayant une valeur Blaine de 3 000 à 9 000 cm²/g, du sulfate d'aluminium et une matière pouzzolanique, en tant que composants actifs.

2. Agent d'accélération qui comprend un verre à aluminosilicate de calcium ayant une valeur Blaine de 3 000 à 9 000 cm²/g, du sulfate d'aluminium et une matière pouzzolanique, en tant que composants actifs.

3. Agent d'accélération selon la revendication 1 ou 2, dans lequel la matière pouzzolanique est au moins un élément choisi dans le groupe constitué par la silice fumée, le méta-kaolin, le laitier de haut fourneau et les cendres volantes.

4. Matériau à appliquer par pulvérisation qui comprend un ciment et l'agent d'accélération tel que défini dans la revendication 1, 2 ou 3, en tant que composants actifs.

5. Béton à appliquer par pulvérisation qui contient le matériau à appliquer par pulvérisation tel que défini dans la revendication 4, en tant que composant actif.

6. Procédé de pulvérisation pour un béton à appliquer par pulvérisation, qui pulvérise le béton à appliquer par pulvérisation selon la revendication 5.
